# EUROPÄISCHE PATENTSCHRIFT

(11) **EP 0 859 749 B1**
(45) Veröffentlichungstag und Bekanntmachung des Hinweises auf die Patenterteilung: **09.02.2000**
(21) Anmeldenummer: 97909246.7
(22) Anmeldetag: 10.09.1997
(51) Int. Cl.: C05F 17/02, C05F 17/00

(54) **VERFAHREN ZUR BIOLOGISCH-THERMISCHEN BEHANDLUNG VON ABFÄLLEN**
BIO-THERMAL TREATMENT OF REFUSE
TRAITEMENT BIO-THERMIQUE DE DECHETS

(30) Priorität: 11.09.1996 DE 19636911; 07.10.1996 DE 19641291
(43) Veröffentlichungstag der Anmeldung: 26.08.1998
(73) Patentinhaber: HERHOF UMWELTTECHNIK GMBH, D-35606 Solms (DE)
(72) Erfinder: SCHNORR, Karl-Ernst, D-35633 Lahnau (DE); MUTZ, Bernd, D-35606 Solms (DE)
(74) Vertreter: Zinnecker, Armin, Dipl.-Ing.
(86) Internationale Anmeldenummer: EP9704959
(87) Internationale Veröffentlichungsnummer: WO9811035

(56) Entgegenhaltungen:
- EP-A- 0 647 604
- WO-A-93/23351
- WO-A-94/27931
- DE-A- 4 107 340
- DE-A- 4 124 880

## Beschreibung

Die Erfindung betrifft ein Verfahren zur biologisch-thermischen Behandlung von organische Bestandteile enthaltenden Abfällen in einem Behälter, bei dem die aus dem Behälter abgeführte Abluft dem Behälter erneut zugeführt wird. Es wird also ein Umluftbetrieb durchgeführt, bei dem die den Behälter verlassende Abluft anschließend diesem Behälter ganz oder zum Teil erneut zugeführt wird. Das Verfahren kann zur biologisch-thermischen Kompostierung oder Stabilisierung der organsiche Bestandteile enthaltenden Abfälle verwendet werden.

Bei dem Behälter handelt es sich um einen geschlossenen Behälter, der zwangsbelüftet wird. Üblicherweise ist im unteren Bereich des Behälters ein im wesentlichen horizontal verlaufender Lochboden vorhanden, auf dem die Abfälle als Rottegut bzw. Rottegemisch in Form einer Schüttung bzw. eines Haufwerks aufliegen. Durch eine Zulufteinrichtung, die üblicherweise aus mehreren Ventilatoren besteht, wird dem Raum unter dem Lochboden ein Gasgemisch zugeführt, das im wesentlichen aus Luft bzw. Umluft besteht. Das Gasgemisch strömt durch die Löcher oder sonstigen Öffnungen des Lochbodens nach oben und von dort in das Rottegemisch hinein. Es durchströmt das Rottegemisch im wesentlichen von unten nach oben und wird vom oberen Bereich des Behälters dann als Abluft abgezogen. Die Abluft kann behandelt werden, bevor sie erneut ganz oder teilweise dem Rottegut wieder zugeführt wird. Beispielsweise ist es möglich, Wasser aus der Umluft abzuscheiden, zum Beispiel dadurch, daß die Umluft gekühlt und das als Kondensat entstehende Wasser abgeschieden wird.

Bei der Kompostierung von Bioabfällen, also von Abfällen, die organische Bestandteile enthalten, zum Zwecke der Kompostherstellung oder Stabilatherstellung wird das Rottegemisch so lange mehr oder weniger belüftet, bis die darin enthaltene biologisch leicht abbaubare organische Substanz abgebaut ist. Sie wird überwiegend durch Bakterien abgebaut, die unter aeroben Bedingungen die größtmögliche Stoffwechselleistung erbringen. Bei den bisher bekannten Verfahren zur Kompostierung in einem Intensivrotteverfahren (also in einem Verfahren in einem geschlossenen Behälter unter Zwangsbelüftung) wird dabei zur Beschleunigung der Kompostierung die Sauerstoffzuführung optimiert. Hierbei entstehen aus fester, amorpher oder flüssiger Substanz die gasförmigen Stoffe CO₂, Wasserdampf und Ammoniak. Diese Stoffwechselprodukte werden mit der das Rottegemisch durchströmenden Luft als Abluft abgeführt, wobei die Temperatur und der Sauerstoffgehalt im Rottegemisch über die Luft (also den Zustand der Zuluft und der Abluft) derart gesteuert werden, daß sich mikrobielles Leben ungehindert entfalten und das vorhandene Potential leicht abbaubarer organischer Substanz in einer kürzest möglichen Zeit abbauen kann.

Schwerer abbaubare organische Substanz wird zunächst überwiegend von Pilzen abgebaut, die - wie die meisten Bakterien - den für den Stoffwechsel benötigten Sauerstoff dem Wasser des Substrates, auf dem sie wachsen entnehmen (s. Schlegel, allgemeine Mikrobiologie, 5. Ausgabe, Seite 169). Beim Abbau dieses Potentials entsteht neue Biomasse in Form von mikrobieller Zellmasse, die wiederum aus leicht abbaubaren Kohlenwasserstoff-Verbindungen besteht. Die neu entstehende Zellmasse ist unter aeroben Bedingungen etwa 20mal größer als unter anaeroben Bedingungen. Sie besteht - wie die leicht abbaubare organische Substanz des Grundsubstrates - ebenfalls zu etwa 85 % aus biologisch leicht abbaubarer organischer Substanz und stellt am Ende des Abbauweges der im Substrat vorhandenen leicht abbaubaren organischen Substanz ein mengenmäßig nicht zu unterschätzendes abbaufähiges Potential dar. Die Reduktion der Substratmasse wie auch der neu entstehenden Biomasse (also der biologische Abbau) verläuft nach einer fallenden Exponentialfunktion, d.h. sie wird nie zu einer gänzlichen Auflösung der Gesamtbiomasse (bestehtend aus Grundsubstrat und entstehender Zellmasse) führen, wohl ist es aber möglich, nach einem entsprechenden Zeitraum den organischen Anteil des Grundsubstrates (also der Bioabfälle) vollkommen abzubauen.

Die meisten derzeitigen Kompostwerksbetreiber klagen darüber, daß Komposte nach Abschluß der technischen Behandlung zwar eine Selbsterhitzung nach dem Rottegrad 4 oder 5 aufweisen, daß jedoch nach einer trocken geführten Lagerung wieder eine Selbsterhitzung nach Rottegrad 1 festzustellen sei. Dieser Umstand ist darauf zurückzuführen, daß Mikroorganismen schwerer abbaubare organische Substanzen in leichter abbaubare organische Substanzen (Zellmassen) umwandeln, die dann bei Wiederbefeuchtung unverzüglich reagieren und in kurzer Zeit wie bei Frischsubstrat große Wärmemengen (als Stoffwechselprodukt) freisetzen, wobei die Temperatur in dem Kompostsubstrat kurzfristig stark ansteigt. Bis heute ist die Zeit und das in der Zeit erreichte Temperaturmaximum das Hauptkriterium für die Bestimmung des Rottegrades. Dies ist zwar nur dann richtig, wenn immer gleiche Prüfbedinungen hinsichtlich Substratmasse und Umgebungsbedingungen herrschen, bestimmt jedoch bis heute als einfache Standardmethode die Kompostqualität. Die richtige Prüfmethode muß die in einer bestimmten Zeit entstehende Wärmemenge oder ein anderes Stoffwechselprodukt genau erfassen (vgl. DE-OS 43 36 497). Nur so ist der Rottegrad oder Abbaugrad einer organischen Substanz festzustellen.

Verfahren zur Durchführung eines Kompostierungsprozesses sind aus den Vorveröffentlichungen DE-PS 36 37 393, DE-PS 40 21 865, DE-PS 43 34 435, EP-PS 322 424, DE-PS 38 29 018, DE-PS 41 24 880, DE-PS 43 22 688, DE-PS 41 07 340, DE-GM 93 00 127 und DE-PS 42 15 267, auf die hiermit Bezug genommen wird, bekannt. Allen diesen Vorveröffentlichungen gemeinsam ist die Inanspruchnahme von Luftsauerstoff aus der das Rottegemisch durchströmenden Luft.

In der deutschen Patentanmeldung Nr. 195 13 262.9-41 wird eine völlig geschlossene Kreislaufführung der Luft und der bei der Gärung entstehenden Gase offenbart, wobei der für die Atmung erforderliche Sauerstoff dem Wasseranteil der Abfälle, den chemischen Verbindungen oder einem von außen zugeführten Frischwasseranteil entnommen wird und nicht der Luft. Die Trocknung des Rottegemisches nach dem Abbau der leicht abbaubaren organischen Substanz erfolgt dabei durch Frischluftzumischung nach der Wasserabscheidung aus der Umluft. Diese Betriebsweise hat allerdings den Nachteil, daß durch die Frischluftzumischung zwar die relative Feuchte der im Kreislauf geführten Gase herabgesetzt und damit die Wasseraufnahmekapazität heraufgesetzt wird, die zur Verdunstung von Restwasser im Substrat erforderliche Wärme jedoch fehlt. Geht - mangels leicht abbaubarer organischer Substanz - die biologisch entstehende Wärme zurück, so ist eine vollkommene Entfeuchtung aufgrund fehlender Wärmeenergie des Rottegemisches und damit eine umweltneutrale Lagerstabilität des Endproduktes nicht gewährleistet. Weiterhin hat die bisher praktizierte Betriebsweise den Nachteil, daß die Abluftentfeuchtung im Kondensator an der Taupunktgrenze verläuft. Somit ist bei Absinken der Temperatur im Rottegemisch die Wasseraufnahmekapazität der Umluft begrenzt, und die im Rottegemisch erreichbaren Endwassergehaltswerte sind für die langfristig zu sichernde Lagerstabilität wie auch für den Heizwert schädlich.

Aus der WO-A-94/27931 ist ein Verfahren zum Kompostieren von organischem Material bekannt, bei dem das organische Material in einen geschlossenen Behälter eingebracht wird. In dem Behälter sind mehrere Materialzonen vorgesehen, nämlich Anfangszonen, Mittelzonen und Endzonen. Das organische Material wird durch den Behälter hindurchgeführt. Es wird in die erste Anfangszone eingebracht und durchläuft dann die Mittelzonen und schließlich die Endzonen, wobei es nach Durchlaufen der letzten Endzone wieder aus dem Behälter entnommen wird. Die das Material durchströmende Luft wird im Kreislauf geführt. Jede Mittelzone und jede Endzone steht mit gesonderten Luftabführungsrohren in Verbindung. Jede Anfangszone steht mit gesonderten Luftzuführungsrohren in Verbindung. Ferner ist eine Einrichtung vorgesehen, durch die Frischluft durch eine oder mehrere der Mittelzonen geführt werden kann. Zumindest ein Teil der Abluft der Mittelzonen kann durch eine oder mehrere der Anfangszonen geführt werden, um diese dadurch zu heizen. Schließlich ist eine Einrichtung vorhanden, durch die Abluft von den Mittelzonen und Anfangszonen durch eine oder mehrere der Endzonen zum Zwecke der Geruchsreinigung geführt wird, und eine Einrichtung, durch die Abluft aus den Endzonen herausgeführt wird. Der Umluftbetrieb findet in der Weise statt, daß Abluft aus den Mittelzonen in eine oder mehrere der Anfangszonen geführt wird. Dabei wird allerdings aus der Umluft kein Kondensat ausgeschieden.

Aus der DE-A-41 07 340 ist ein Verfahren zur Kompostierung von organischen Stoffen, insbesondere Abfällen, bekannt, bei dem das Rottegut in einen geschlossenen Behälter eingebracht und unter Zuführung von Sauerstoff mikrobiell abgebaut wird, wobei dem Rottegut ein Gemisch aus reinem Sauerstoff und Abluft zugeführt wird. Aus der aus dem Rottegut austretenden Abluft wird das darin befindliche CO₂ und Wasser abgeschieden. Die Abluft wird allerdings vor dem Wiedereintritt in den Behälter nicht erwärmt.

Aus der WO-A-93/23351 ist eine Kompostierungsanlage bekannt, die aus mehreren separaten Reaktoren mit einer zentralen Belüftungseinrichtung besteht, die als geregeltes Umluftsystem ausgebildet ist. Das zentrale Belüftungssystem kann eine Umluftkonditionierung aufweisen, bei der Mittel zur Kondensatabscheidung, Wärmerückgewinnung, Filterung für Geruchsstoffe und/oder Waschen für luftgetragene Problemstoffe vorhanden sein können. Auch hier wird allerdings die Abluft vor dem Wiedereintritt in den Behälter nicht erwärmt.

Die EP-A-647 604 offenbart ein Verfahren zum Kompostieren von organischen Stoffen (Rottegut), bei dem das Rottegut in einem geschlossenen Behälter unter Luftzuführung biologisch abgebaut wird, wobei zumindest ein Teil der Abluft dem Rottegut erneut zugeführt wird. Das Verfahren wird derart gesteuert, daß die relative Feuchtigkeit in dem Rottegut zwischen einem unteren Grenzwert und einem oberen Grenzwert gehalten wird. Die Abluft kann gekühlt und der darin enthaltene Wasserdampf kann zumindest zum Teil auskondensiert werden. Auch dabei wird allerdings die Abluft vor dem Wiedereintritt in den Behälter nicht erwärmt.

Aufgabe der Erfindung ist es, ein verbessertes Verfahren zur biologisch-thermischen Behandlung von organische Bestandteile enthaltenden Abfällen vorzuschlagen.

Erfindungsgemäß wird diese Aufgabe durch die Merkmale des Anspruchs 1 gelöst. Die aus dem Behälter abgeführte Abluft wird dem Behälter ganz oder teilweise erneut zugeführt. Aus der Abluft wird Kondensat abgeschieden. Dieses Kondensat wird hinsichtlich seiner Menge und/oder Inhaltsstoffe kontrolliert. Das Kondensat kann aus der Abluft durch Kühlung ausgeschieden werden. Es kann aufgefangen und gemessen und anschließend hinsichtlich seiner Menge und/oder Inhaltsstoffe kontrolliert werden. Anschließend wird die Abluft vor dem Wiedereintritt in den Behälter erwärmt. Die Abluft bzw. Umluft wird derart erwärmt, daß in dem Rottegemisch ein Restfeuchtegehalt erreicht wird, der zu einem Diffusionsgleichgewicht mit der das Rottegemisch bei Lagerung umgebenden Luft im Normzustand führt.

Als Wärmequellen, die zu dieser Nacherhitzung genutzt werden können, kommen insbesondere in Frage: die Rückführung der aus der im Kreislauf geförderten Luft entzogenen Kondensationswärmeenergie, vorzugsweise mittels Luft/Luft-Wärmetauscher; die Zustandsänderung der Luft mittels Druckerhöhung; die aus dem Umluftkreislauf ausgeschleuste Kondensationswärme, die mittels Wärmepumpe auf ein höheres Temperaturniveau transferiert wird; die Wärme aus dem Verbrennungsprozeß eines aus Abfällen hergestellten Trockenstabilates oder sonstigen Zwischenprodukts; die Wärme aus dem Verbrennungsprozeß von Siebüberläufen; die Wärme aus Verbrennungsprozessen anderer Energieträger; die Wärme aus Solaranlagen; die Wärme aus elektrischen Umformprozessen. Dabei können die Wärmequellen als zentrale Anlagen oder auch als dezentrale Energiestationen betrieben werden, die jeden Behälter in einer Anlage mit mehreren Behältern einzeln versorgen.

Vorteilhafte Weiterbildungen sind in den Unteransprüchen beschrieben.

Vorzugsweise wird die Zusammensetzung der Umluft, also der Abluft, die dem Behälter wieder zugeführt wird, in Abhängigkeit der Partialdrucke ihrer Komponenten gesteuert. Die Zusammensetzung der im Kreislauf geführten Gasmenge wird also in Abhängigkeit der Partialdrucke der Gaskomponenten gesteuert. Dadurch besteht die Möglichkeit, eine aerobe Atmung zu gewährleisten, ohne gasförmigen Sauerstoff von außen zuführen zu müssen (es ist allerdings möglich, gasförmigen Sauerstoff von außen zuzuführen). Bei der Massen-Bilanzierung von Rotteprozessen hat sich überraschend herausgestellt, daß ein signifikanter Verbrauch gasförmigen Sauerstoffs nicht nachzuweisen war, obwohl alle Merkmale eines aeroben Stoffwechsels vorlagen. Hieraus kann gefolgert werden, daß der zur aeroben Atmung benötigte Sauerstoff zum Abbau von leicht abbaubaren organischen Substanzen im Substrat bereits vorhanden ist und für die mikrobielle Phase des aeroben Abbaus ausreicht bzw. über Wasserzuführung erreichbar ist (vgl. hierzu die PCT-Anmeldung PCT/EP 96/01532).

Eine weitere vorteilhafte Weiterbildung ist dadurch gekennzeichnet, daß die gasförmigen Stoffwechselprodukte aus der Umluft abgeschieden werden. Dies geschieht vorzugsweise durch Molekularsiebe. Zur Steuerung der Partialdrucke der im Kreislauf geführten Spülgase werden also die gasförmigen Stoffwechselprodukte aus den Gasgemischen abgeschieden, was vorzugsweise durch entsprechende Molekularsiebe geschieht.

Nach Austritt aus dem Rottegemisch werden die Gase, die Feuchtigkeit aufgenommen haben, abgekühlt, so daß die darin mitgeführten kondensierbaren und/oder sublimierbaren Stoffe wie beispielsweise Wasser, Ammoniak und ähnliches, abgeschieden und in einer Flüssigkeit aus dem Kreislauf entfernt werden können. Das Partialdruckverhältnis der "Trägergase" (Stickstoff und Sauerstoff) in der klimatischen Umgebung der Mikroorganismen zu den "Stoffwechselgasen" (Kohlendioxid und Wasserdampf) wird vorzugsweise dadurch gesteuert, daß bei einem Gesamtdruckanstieg über den atmosphärischen Druck (von 1013 mbar = Hektopascal) hinaus überschüssige Mengen CO₂, Ammoniak und Wasserdampf abgeführt werden. Dies kann durch einen Waschvorgang geschehen.

Danach werden die Gase nicht, wie bisher, mit sauerstoffhaltiger, trockener Luft gemischt, um die Wasseraufnahmefähigkeit zu erhöhen, sondern sie werden durch eine Wärmequelle von außen erwärmt. Hierdurch werden die Partialdruckverhältnisse der Gaskomponenten geändert. Ferner werden die Wasser- und Kohlendioxidaufnahmekapazität der Gase erhöht und die zur Verdunstung des Wassers erforderliche Wärmeenergie eingebracht. Die ist insbesondere dann von großem Vorteil, wenn sich die mikrobielle Abbauleistung infolge langsam einsetzender Trockenstarre drastisch verringert. Will man Biomassen so stabilisieren, daß mikrobieller Abbau gänzlich zum erliegen kommt, muß der Wassergehalt an den Oberflächen der Abfallpartikel auf Werte unterhalb des Normzustandes der Luft (H₂O < 3,9 g/kg_{trL} entsprechend etwa 15 % relativer Stoff- und Luftfeuchte) gebracht werden, und die leicht abbaubaren organischen Verbindungen, z.B. Kohlehydrate etc., müssen biologisch abgebaut sein. Dies ist auf den bisher beschrittenen Wegen (Kompostierung mit Umluftführung ohne Nacherhitzer oder mechanisch thermischer Trocknung) in kurzer Zeit (also in weniger als etwa sieben Tagen) nicht möglich, wohl aber nach dem erfindungsgemäßen Verfahren.

Eine weitere vorteilhafte Weiterbildung ist dadurch gekennzeichnet, daß das Rottegemisch dem Stickstoffgehalt entsprechend wechselweise von aeroben und anaeroben Gasgemischen durchströmt wird.

Ferner ist es vorteilhaft, wenn das Rottegemisch der vorherrschenden Mikroorganismenart entsprechend wechselweise von einem feuchtigkeitsgesättigten und einem wasseraufnahmefähigen Gasgemisch durchströmt wird.

In bestimmten Anwendungsfällen kann es vorteilhaft sein, die Umluft mit reinem Sauerstoff anzureichern.

Vorzugsweise erfolgt die Prozeßsteuerung in Abhängigkeit der Leitfähigkeit, dem chemischen Sauerstoffbedarf und/oder dem pH-Wert des Kondensats.

Die im Kreislauf geführten Gase werden vorzugsweise mit mehreren Zuluftventilatoren und ohne Abluftventilator bewegt. Um die sich neu bildende Biomasse weiter zu reduzieren, kann nach einem Fermentationszyklus das Rottegemisch dem Behälter entnommen, vorzugsweise nachzerkleinert, vorzugsweise wieder befeuchtet und dem Behälter (Fermenter) wieder zugeführt und einem weiteren Rottezyklus unterworfen werden. Dabei ist dann infolge rasch einsetzender Wärmeentwicklung ein Temperaturanstieg festzustellen, dessen Progression umso größer ist, je größer die vorher infolge biologischen Abbaus neu gebildete Biomasse der streng aeroben Mikroorganismen ist.

Die Erfindung baut auf folgenden Überlegungen auf:

Bakterien, Pilze und Hefen, die den biologischen Abbau durchführen, entfalten ihr Stoffwechselmaximum bei unterschiedlichen Lebensbedingungen. Bakterien bevorzugen einen hohen a_{w}-Wert von 0,98 (der a_{w}-Wert repräsentiert die relative Luftfeuchte über Wasser mit darin gelöstem Luftsauerstoff und Nährstoffen). Schimmelpilze mit einem bevorzugten a_{w}-Wert von 0,8 und Hefen mit einem bevorzugten a_{w}-Wert von 0,6 können dagegen bei wesentlich geringerer relativer Feuchte, d.h. weniger Wasser und damit auch Sauerstoff in Ihrer Umgebung leben.

In einer Atmosphäre mit geringem Sauerstoffgehalt wird weniger neue Zellmasse gebildet, die somit auch nicht abgebaut werden muß, um einen ausgereiften oder lagerfähig stabilen Kompost herzustellen.

Die Bildung des Biogases CH₄ kann verhindert werden, indem eine Versäuerung des Substrates dadurch vermieden wird, daß die im Kreislauf geführte Gaszusammensetzung hinsichtlich Feuchte (a_{w}-Wert < 85 %), CO₂-Gehalt (> 10 %), Sauerstoffgehalt (< 10 %) und Ammoniakgehalt (< 1%) so gesteuert wird, daß für Pilze und pilzähnliche Mikroorganismen (Aktinomyciten) vorteilhafte Zwischenabbauprodukte und Klimavoraussetzungen entstehen.

Eine intermittierende Betriebsweise mit dem Wechsel der Substratfeuchte hat den Vorteil, daß Biomassen in der Trockenstarre leichter in kleinere Bruchstücke zerlegt werden und damit für Bakterien leichter angreifbar sind. Nach der Pilzphase werden somit Zerkleinerungsmaßnahmen und die zur Wiederholung eines optimalen Abbaustoffwechsels erforderliche Klimafeuchte hergestellt. Erfindungsgemäß wird dies dadurch erreicht, daß in zeitlicher Folge durch Veränderung des Sauerstoffpartialdruckes in Verbindung mit Wasser fakultativ anaeroben Mikroorganismen die Möglichkeit gegeben wird, organisch gebundenen Sauerstoff zu verwerten, beispielsweise durch Denitrifikation.

Eine weitere vorteilhafte Weiterbildung ist dadurch gekennzeichnet, daß der Abluft vor dem Wiedereintritt in den Behälter Wasser zugeführt wird. Vorzugsweise wird Frischwasser zugeführt. Die Zuführung des Wassers erfolgt vorzugsweise nach der Erwärmung der in den Behälter wieder eintretenden Abluft. Vorzugsweise wird das Wasser in den Luftstrom eingedüst.

Nach einer weiteren vorteilhaften Weiterbildung sind mehrere Behälter vorgesehen, deren Abluftleitungen in eine Sammel-Abluftleitung münden und deren Zuluftleitungen von einer Sammel-Zuluftleitung abzweigen. Hierdurch kann das Verfahren besonders wirkungsvoll durchgeführt werden. Ferner ergibt sich der weitere Vorteil, daß durch die Sammelleitungen der CO₂-Gehalt verschiedener Behälter ausgeglichen werden kann. Wenn beispielsweise der CO₂-Gehalt in der Umluft eines bestimmten Behälters sehr hoch ist, kann diesem Behälter Luft aus der Sammelleitung zugeführt werden, die einen geringeren CO₂-Gehalt hat. Dadurch kann die Abluftmenge weiter reduziert werden, möglicherweise bis auf Null.

Vorteilhaft ist es, wenn die Luft der Sammel-Abluftleitung zunächst einem Wärmetauscher zugeführt wird, vorzugsweise einem Luft-Luft-Wärmetauscher, von dem die von der Sammel-Abluftleitung abgegebene Wärme auf die Sammel-Zuluftleitung bzw. die darin strömende Luft bzw. Umluft übertragen wird. Es ist ferner vorteilhaft, wenn die Wärme aus der Sammel-Abluftleitung statt dessen oder zusätzlich durch einen gegebenenfalls weiteren Wärmetauscher, vorzugsweise einen Luft-Wasser-Wärmetauscher, an einen Kühlkreislauf, vorzugsweise an einen Kühlwasserkreislauf, abgegeben wird.

Es ist ferner vorteilhaft, wenn die Luft bzw. Umluft in der Sammel-Zuluftleitung durch eine Vorwärmeinrichtung erwärmt wird, was vorzugsweise in Strömungsrichtung nach dem obengenannten Luft-Luft-Wärmetauscher erfolgt.

Die Erfindung betrifft ferner eine Vorrichtung zur Durchführung des erfindungsgemäßen Verfahrens mit mehreren Behältern, zu den Behältern führenden Zuluft- und Abluftleitungen und einer Sammel-Abluftleitung sowie einer Sammel-Zuluftleitung.

Vorteilhafte Weiterbildungen der Vorrichtung sind in den weiteren Unteransprüchen beschrieben.

Ausführungsbeispiele der Erfindung werden nachstehend anhand der beigefügten Zeichnung im einzelnen erläutert. In der Zeichnung zeigt
- Abb. 1: eine schematische Darstellung zweier Behälter einschließlich der weiteren Komponenten für die Durchführung des Verfahrens,
- Abb. 2: eine schematische Darstellung eines Behälters mit den weiteren Komponenten für die Durchführung des Verfahrens und
- Abb. 3: eine Vorrichtung zur Durchführung des Verfahrens mit mehreren Behältern.

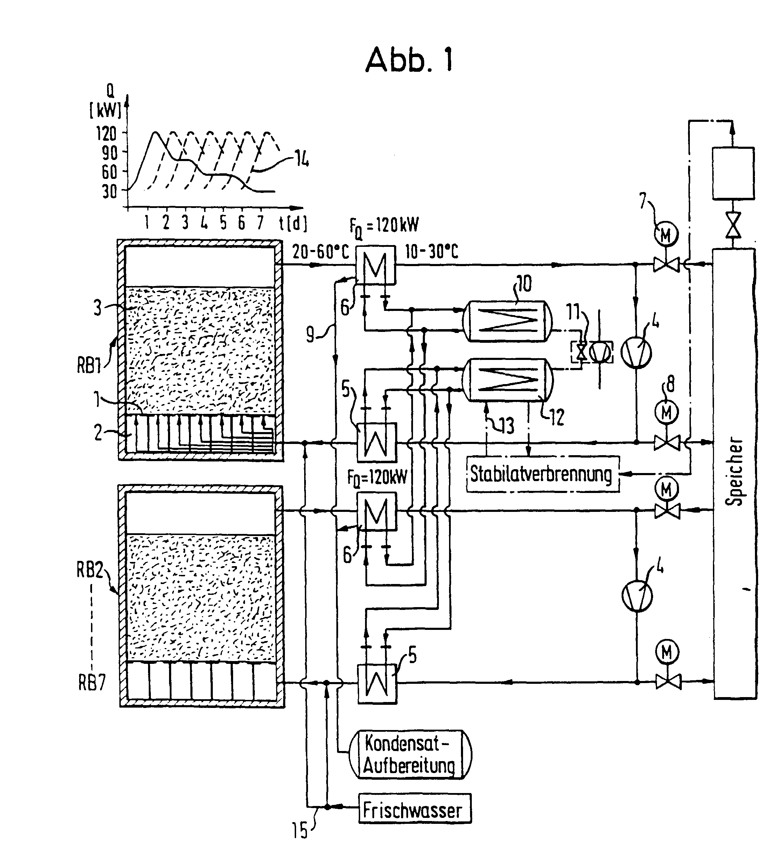

Die zu fermentierende Biomasse wird in die in Abb. 1 gezeigten Behälter (Rotteboxen) RB1 und RB2 täglich eingefüllt, da auch die Entsorgungszyklen einen täglichen Rhytmus aufweisen. In einer Anlage können noch weitere Behälter vorhanden sein. Jeder Behälter weist in seinem unteren Bereich einen im wesentlichen waagerecht verlaufenden Lochboden 1 auf, in dem Löcher oder sonstige Öffnungen vorgesehen sind. Unterhalb des Lochbodens 1 befindet sich eine Vielzahl kleinerer beaufschlagbarer, d.h. steuerbarer Luftkammern 2. Die Luft gelangt durch Ventilatoren 4 in die Luftkammern 2 und durch die Löcher des Lochbodens 1 hindurch in das auf dem Lochboden 1 aufliegende Rottegemisch 3. Aufgrund der Vielzahl der einzelnen Luftkammern 2 wird ein ungleicher Gasdurchtritt durch das Rottegemisch 3 mit der Gefahr eines Durchbruchs der gesamten Gasmenge an einer Stelle oder in einem eng begrenzten Bereich vermieden. Der Lochboden 1 kann aus festen Lochplatten, Lochsteinen, Pendelbodenprofilen oder luftdurchlässigen Gurtförderern bestehen.

Auf dem Lochboden 1 lagert das Rottegemisch 3 in gasdurchlässiger Form. Der Ventilator 4 bewegt die im System eingeschlossene Gasmenge im Kreislauf über den Zuluftwärmetauscher 5 durch das Rottegemisch und den Abluftwärmetauscher 6. Wenn in Sonderfällen CO₂ abgelassen und Sauerstoff eingelassen werden soll, werden die Ventile 7 und 8 geöffnet.

Das durch Kühlung aus dem Wärmetauscher 6 abgeführte Kondensat wird über die Leitung 9 einer Kondensataufbereitungsanlage mit Sauerstoffanreicherung zugeführt. Es kann danach dazu verwendet werden, das Rottegut für einen weiteren Rottezyklus wieder zu befeuchten.

Die über den Wärmetauscher 6 abgeführte Wärme wird über den Speicher 10, die Wärmepumpe 11 und den weiteren Speicher 12 dem Wärmetauscher 5 zugeführt und dort auf die Zuluft übertragen. Der Trocknungsprozeß ist zu Ende, wenn die Wasseraufnahme des Kreislaufgases gegen Null g/kg geht. Wenn aus thermischen Prozessen, beispielsweise aus der Stabilatverbrennung, Wärme zur Verfügung steht, kann diese an der Stelle 13 in den Wärmetauscher 12 eingespeist werden.

Wie aus Abb. 1 ersichtlich, kann Frischwasser 15 zugeführt werden. Dieses Frischwasser wird nach der Erwärmung in den Wärmetauschern 5 und 6 in den Luftstrom eingedüst. Die derart befeuchtete Luft gelangt dann in die Behälter.

Die Behälter werden täglich, dem Entsorgungszyklus der Abfallwirtschaft folgend, gefüllt, was bedeutet, daß die einzelnen Behälter im täglichen Abstand und im Verlauf der Abbaukinetik ein Maximum bei der Freisetzung des Stoffwechselproduktes "Wärme" erreichen. Dies ist im Zeit-Wärme-Diagramm 14 dargestellt. Jeden Tag wird ein Behälter RBn gefüllt. Der Behälter RB1 erreicht das Wärmemaximum nach etwa einem Tag, der Behälter RB2 nach zwei Tagen, der Behälter RB3 nach drei Tagen und so fort. Da nach etwa sieben Tagen die Wärmefreisetzung ein Minimum erreicht hat, kann der Prozeß hier beendet werden. Aus dem Diagramm 14 ist ferner zu erkennen, daß bei der Summierung der täglich abzuführenden Wärmemengen nicht von den jeweiligen Tagesmaxima auszugehen ist, sondern von einem degressiven Verlauf. Daraus folgt, daß bei Zusammenschaltung von bis zu sieben Rottebehältern an eine Wärmetauscherkombination mit Wärmepumpe ein günstiges Kosten-Nutzen-Verhältnis zu erreichen ist.

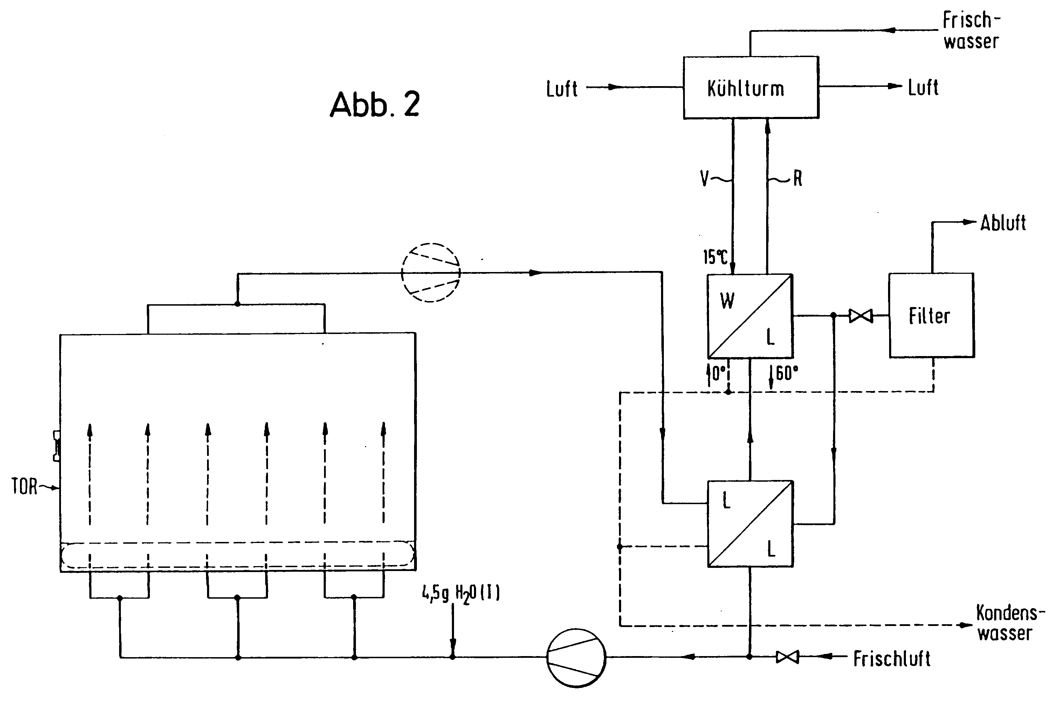

Die Abb. 2 zeigt ein Ausführungsbeispiel mit einem Rottebehälter, der im wesentlichen ähnlich aufgebaut ist wie diejenigen der Abb. 1. Dem Rottebehälter wird durch einen Ventilator Luft zugeführt, die den Lochboden durchdringt und das darüber befindliche Rottegemisch durchströmt. Danach wird die Abluft durch ein weiteres Gebläse abgezogen und einem Luft/Luft-Wärmetauscher zugeführt. Sie gibt dort Wärme auf die dem Rottegemisch zuzuführende Luft ab. Anschließend wird die Luft einem Wasser/Luft-Wärmetauscher zugeführt, wo sie weitere Wärme an einen luftgekühlten Kühlturm abgibt. Die Luft durchströmt dann die andere Seite des Luft/Luft-Wärmetauschers und wird als Umluft erneut dem Rottegemisch zugeführt. Bei Bedarf kann Frischluft durch ein aufsteuerbares Ventil in den Kreislauf eingespeist werden. Es ist ferner möglich, Abluft durch ein Ventil und ein anschließendes Filter aus dem Kreislauf zu entfernen. Aus den Wärmetauschern kann Kondenswasser abgezogen werden.

Die geschlossenen Rottebehälter sind vorzugsweise wärmeisoliert. Sie sind vorzugsweise aus Stahlbeton gefertigt. In dem Behälter werden in einem Zeitraum von etwa einer Woche alle biologisch leicht abbaubare Verbindungen bildenden Stoffe durch in der Substratflüssigkeit gelösten und gebundenen Sauerstoff durch aerobe Atmung gasförmig freigesetzt und größtenteils mit einer im Kreislauf geführten, ständig bewegten Gasmenge aus dem Rottegemisch entfernt, wobei die Gasmenge über einen Lochboden, der vorzugsweise mit darunter liegenden, einzeln beaufschlagbaren Luftkammern versehen ist, von unten nach oben durch das Rottegemisch geführt wird. Die Erwärmung der Umluft kann durch die Kondensationswärme des aus der Abluft abgeschiedenen Kondensats erfolgen (vgl. Abb. 2). Sie kann durch Druckerhöhung im Umluftstrom erfolgen oder durch einen Wärmetauscher mit bekannten Wärmeträgern. Mit dem erfindungsgemäßen Verfahren kann die Kompostierung von Biomassen durchgeführt werden oder die Stabilisierung von Abfällen. Die Gesamtanlage zur Durchführung des Verfahrens kann aus Zuluftventilatoren, Rottebehältern (Rotteboxen), Abluft/Zuluft-Wärmetauschern, Abluft/Wärmeträger-Wärmetauschern, Abluftventil, Abluftreinigungsanlage, Zuluftventil, Wassereinspritzdüse, Kondensatmeßvorrichtung, Temperaturmeßvorrichtung, Programmregler und Schaltschrank bestehen. Es ist möglich, mit oder ohne Abluftventilatoren zu arbeiten sowie mit oder ohne CO₂-Meßvorrichtung. Die Rottebehälter können aus Stahlbetongehäusen mit und ohne Wärmeisolierung, einer gasdicht abschließbaren Türe, luftdurchlässigen Bodenplatten und darunter liegenden einzeln beaufschlagbaren Luftkästen bestehen. Die Luftkanäle unter den Lochplatten können in Längsrichtung unter den Rotteboxen von der Einblasstelle hinwegführend konisch verlaufen und/oder mit verschiedenen Luftmengen beaufschlagt werden, so daß Randströmungsverluste an den Wänden der Rottebehälter beeinflußbar sind.

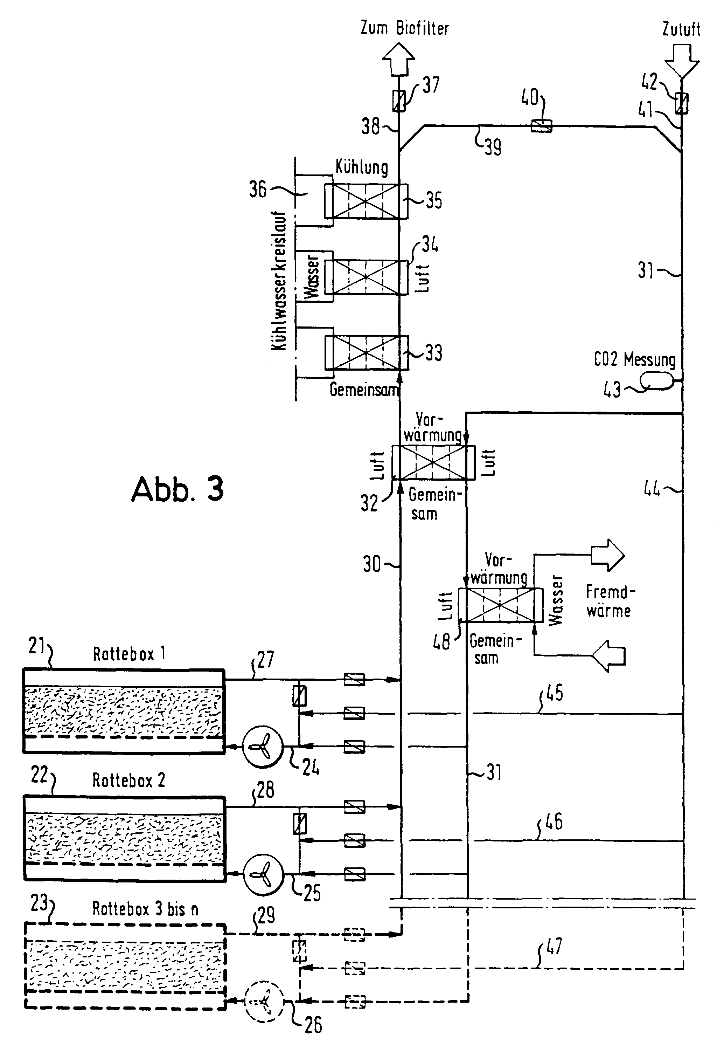

Die Abb. 3 zeigt eine Vorrichtung mit mehreren Behältern 21, 22, 23, zu denen jeweils eine Zuluftleitung 24, 25, 26 führt, in denen jeweils ein Ventilator angeordnet ist, und von denen jeweils eine Abluftleitung 27, 28, 29 wegführt. Die Abluftleitungen 27, 28, 29 führen über jeweils einen Schieber zu einer Sammel-Abluftleitung 30. Die Zuluftleitungen 24, 25, 26, in denen ebenfalls jeweils ein Schieber vorhanden ist, zweigen von einer Sammel-Zuluftleitung 31 ab.

Die Sammel-Abluftleitung 30 läuft durch einen Luft-Luft-Wärmetauscher 32, durch den die Wärme der in der Sammel-Abluftleitung 30 strömenden Luft auf die in der Sammel-Zuluftleitung 31 strömende Luft abgegeben wird. Anschließend durchläuft die Luft in der Sammel-Abluftleitung 30 drei Luft-Wasser-Wärmetauscher 33, 34, 35, durch die die Wärme an einen Kühlwasserkreislauf 36 abgegeben wird.

Durch einen Schieber 37 in der Abzweigung 38 von der Sammel-Abluftleitung 30 kann Luft an ein Biofilter abgegeben werden.

Die Sammel-Abluftleitung 30 geht durch eine Verbindungsleitung 39, in der ein Schieber 40 angeordnet ist, in die Sammel-Zuluftleitung 31 über. In die Sammel-Zuluftleitung 31 mündet eine Abzweigung 41, in der ein Schieber 42 vorgesehen ist, der zur Zuführung oder Zumischung von Zuluft aufgesteuert werden kann. In Strömungsrichtung anschließend ist in der Sammel-Zuluftleitung 31 ein CO₂-Meßgerät 43 vorgesehen.

Die Sammel-Zuluftleitung führt dann weiter zu dem Luft-Luft-Wärmetauscher 32. Eine Abzweigung 44 umgeht diesen Luft-Luft-Wärmetauscher 32, so daß die Zuluft oder ein Teil davon auch ohne Erwärmung in diesem Wärmetauscher 32 den Behältern 21, 22, 23 zugeführt werden kann, und zwar durch weitere Zuluftleitungen 45, 46, 47, in denen ebenfalls jeweils ein Schieber vorgesehen ist.

Von jeder Abtuftleitung 27, 28, 29 führt eine individuelle Umluftleitung mit einem Schieber zu der jeweiligen Zuluftleitung 24, 25, 26. Hierdurch ist es möglich, einen Teil der Umluft für jeden Behälter individuell im Kreislauf zu führen und nur einen Teil der Umluft über die Sammelleitungen laufen zu lassen.

In der Sammel-Zuluftleitung 31 ist in Strömungsrichtung nach dem Luft-Luft-Wärmetauscher 32 eine Vorwärmeinrichtung 48 vorgesehen, die aus einem Luft-Wasser-Wärmetauscher besteht, dem Fremdwärme zuführbar ist.

## Patentansprüche

1. Verfahren zur biologisch-thermischen Behandlung von organische Bestandteile enthaltenden Abfällen in einem Behälter,
bei dem die aus dem Behälter abgeführte Abluft dem Behälter ganz oder zum Teil erneut zugeführt wird (Umluftbetrieb),
bei dem aus der Abluft Kondensat abgeschieden wird und bei dem dieses Kondensat hinsichtlich seiner Menge und/oder Inhaltsstoffe kontrolliert wird
und bei dem die Abluft vor dem Wiedereintritt in den Behälter erwärmt wird.

2. Verfahren nach Anspruch 1, dadurch gekennzeichnet, daß die Zusammensetzung der Umluft in Abhängigkeit der Partialdrucke ihrer Komponenten gesteuert wird.

3. Verfahren nach Anspruch 1 oder 2, dadurch gekennzeichnet, daß die gasförmigen Stoffwechselprodukte aus der Umluft abgeschieden werden, vorzugsweise durch Molekularsiebe.

4. Verfahren nach einem der vorhergehenden Ansprüche, dadurch gekennzeichnet, daß das Rottegemisch dem Stickstoffgehalt entsprechend wechselweise von aeroben und anaeroben Gasgemischen durchströmt wird.

5. Verfahren nach einem der vorhergehenden Ansprüche, dadurch gekennzeichnet, daß das Rottegemisch der vorherrschenden Mikroorganismenart entsprechend wechselweise von einem feuchtigkeitsgesättigten und einem wasseraufnahmefähigen Gasgemisch durchströmt wird.

6. Verfahren nach einem der vorhergehenden Ansprüche, dadurch gekennzeichnet, daß die Umluft mit reinem Sauerstoff angereichert wird.

7. Verfahren nach einem der vorhergehenden Ansprüche, dadurch gekennzeichnet, daß die Prozeßsteuerung in Abhängigkeit der Leitfähigkeit, dem chemischen Sauerstoffbedarf und/ oder dem pH-Wert erfolgt.

8. Verfahren nach einem der vorhergehenden Ansprüche, dadurch gekennzeichnet, daß der Abluft vor dem Wiedereintritt in den Behälter Wasser zugeführt wird.

9. Verfahren nach einem der vorhergehenden Ansprüche, dadurch gekennzeichnet, daß mehrere Behälter (21, 22, 23) vorgesehen sind, deren Abluftleitungen (27, 28, 29) in eine Sammel-Abluftleitung (30) münden und deren Zuluftleitungen (24, 25, 26) von einer Sammel-Zuluftleitung (31) abzweigen.

10. Verfahren nach Anspruch 9, gekennzeichnet durch einen Wärmetauscher, vorzugsweise einen Luft-Luft-Wärmetauscher (32) zum Abgeben von Wärme von der Sammel-Abluftleitung (30) auf die Sammel-Zuluftleitung (31).

11. Verfahren nach Anspruch 9 oder 10, gekennzeichnet durch einen Wärmetauscher, vorzugsweise einen Luft-Wasser-Wärmetauscher (33, 34, 35) zum Abgeben von Wärme von der Sammel-Abluftleitung (30) an einen Kühlkreislauf, vorzugsweise einen Kühlwasserkreislauf (36).

12. Verfahren nach einem der Ansprüche 9 bis 11, gekennzeichnet durch eine Vorwärmeinrichtung (48) zum Vorwärmen der die Sammel-Zuluftleitung (31) durchströmenden Luft.

13. Vorrichtung zur Durchführung des Verfahrens nach Anspruch 9, bestehend aus mehreren Behältern (21, 22, 23) zu den Behältern führenden Zuluft- und Abluftleitungen (24, 25, 26, 27, 28, 29), einer Sammel-Abluftleitung (30) und einer Sammel-Zuluftleitung (31).

14. Vorrichtung nach Anspruch 13, gekennzeichnet durch einen Wärmetauscher, vorzugsweise einen Luft-Luft-Wärmetauscher (32) und/oder einen Wärmetauscher, vorzugsweise einen Luft-Wasser-Wärmetauscher (33, 34, 35) und/oder eine Vorwärmeinrichtung (48).

## Claims

1. Process for the biothermal treatment of waste materials containing organic constituents in a container,
in which the exhaust air removed from the container is returned either entirely or partially to said container (recycle air operating mode),
in which condensate is separated out from the exhaust air, said condensate being monitored to determine its quantity and/or contents,
and in which the exhaust air is heated prior to re-entry into said container.

2. Process according to Claim 1, characterised in that the composition of the recycled air is controlled as a function of the partial pressures of its components.

3. Process according to Claim 1 or 2, characterised in that the gaseous products of the metabolic process are separated from the recycled air, preferably by molecular sieves.

4. Process according to one of the preceding Claims, characterised in that aerobic and anaerobic gas mixtures are alternately passed through the decomposing biomass in accordance with the nitrogen content thereof.

5. Process according to one of the preceding Claims, characterised in that a liquid-saturated gas mixture and a water-absorbable gas mixture alternately flow through the decomposing biomass in accordance with the prevailing type of micro organism contained therein.

6. Process according to one of the preceding Claims, characterised in that the recycled air is enriched with pure oxygen.

7. Process according to one of the preceding Claims, characterised in that the process is controlled as a function of conductivity, biochemical oxygen demand and/or the pH value.

8. Process according to one of the preceding Claims characterised in that water is added to the exhaust air prior to its re-entry into the container.

9. Process according to one of the preceding Claims, characterised in that several containers (21, 22, 23) are provided, of which the exhaust air pipes (27, 28, 29) are connected to an exhaust manifold (30), and of which the supply pipes (24, 25, 26) extend from a supply manifold (31).

10. Process according to Claim 9, characterised by a heat exchanger, preferably an air-air heat exchanger (32) for the transfer of heat from the exhaust manifold (30) to the supply manifold (31).

11. Process according to Claim 9 or 10, characterised by a heat exchanger, preferably an air-water heat exchanger (33, 34, 35) for the transfer of heat from the exhaust manifold (30) to a cooling circuit, preferably a cooling water circuit (36).

12. Process according to one of Claims 9 to 11, characterised by a pre-heating device (48) for preheating the air passing through the supply header (31).

13. Apparatus for performing the process according to Claim 9, comprising several containers (21, 22, 23), supply air and exhaust pipes leading to and from the containers (24, 25, 26, 27, 28, 29), an exhaust manifold (30) and a supply manifold (31).

14. Apparatus according to Claim 13 characterised by a heat exchanger, preferably an air-air heat exchanger (32) and/or a heat exchanger, preferably an air-water heat exchanger (33, 34, 35) and/or a preheating device (48).

## Revendications

1. Traitement bio-thermique de déchets contenant des éléments organiques dans une cuve,
dans lequel l'air d'échappement évacué de la cuve est soit intégralement soit en partie réacheminé (fonctionnement à air recyclé),
dans lequel du condensat est séparé de l'air d'échappement et dans lequel ce condensat est contrôlé en ce qui concerne sa quantité et/ou les matières qu'il contient,
et dans lequel l'air d'échappement est réchauffé avant de rentrer dans la cuve.

2. Traitement selon la revendication 1, caractérisé en ce que la composition de l'air recyclé est commandée en fonction des pressions partielles de ses composants.

3. Traitement selon les revendications 1 ou 2, caractérisé en ce que les produits de métabolisme gazeux sont séparés de l'air recyclé de préférence par des tamis moléculaires.

4. Traitement selon l'une quelconque des revendications précédentes, caractérisé en ce que le mélange en décomposition est traversé en alternance de mélanges de gaz aérobie et anaérobie en fonction de la teneur en azote.

5. Traitement selon l'une quelconque des revendications précédentes, caractérisé en ce que le mélange en décomposition est traversé en alternance par un mélange de gaz saturé en humidité et un mélange de gaz capable d'absorber de l'eau en fonction du type de micro-organismes prédominant.

6. Traitement selon l'une quelconque des revendications précédentes, caractérisé en ce que l'air recyclé est enrichi d'oxygène pur.

7. Traitement selon l'une quelconque des revendications précédentes, caractérisé en ce que la commande du traitement est effectuée en fonction de la conductivité, du besoin en oxygène chimique et/ou de la valeur du pH.

8. Traitement selon l'une quelconque des revendications précédentes, caractérisé en ce que de l'eau est ajoutée à l'air d'échappement avant sa rentrée dans la cuve.

9. Traitement selon l'une quelconque des revendications précédentes, caractérisé en ce que plusieurs cuves (21, 22, 23) sont prévues dont les conduites pour l'air d'échappement (27, 28, 29) débouchent dans une conduite collectrice d'air d'échappement (30) et dont les conduites d'air d'apport (24, 25, 26) se ramifient à partir d'une conduite collectrice d'air d'apport (31).

10. Traitement selon la revendication 9, caractérisé par un échangeur de chaleur, de préférence un échangeur de chaleur air/air (32) pour le transfert de chaleur de la conduite collectrice d'air d'échappement (30) à la conduite collectrice d'air d'apport (31).

11. Traitement selon les revendications 9 ou 10, caractérisé par un échangeur de chaleur, de préférence un échangeur de chaleur air/eau (33, 34, 35) pour le transfert de chaleur de la conduite collectrice d'air d'échappement (30) à un circuit de refroidissement, de préférence un circuit de refroidissement à eau (36).

12. Traitement selon l'une quelconque des revendications 9 à 11, caractérisé par un dispositif de préchauffage (48) pour préchauffer l'air qui traverse la conduite collectrice d'air d'apport (31).

13. Dispositif pour la réalisation du traitement selon la revendication 9, consistant en plusieurs cuves (21, 22, 23), des conduites d'air d'échappement et d'amenée d'air d'apport conduisant aux cuves (24, 25, 26, 27, 28, 29), une conduite collectrice d'air d'échappement (30) et une conduite collectrice d'air d'apport (31).

14. Dispositif selon la revendication 13, caractérisé par un échangeur de chaleur, de préférence un échangeur de chaleur air/air (32) et/ou un échangeur de chaleur, de préférence un échangeur de chaleur air/eau (33, 34, 35) et/ou un dispositif de préchauffage (48).
